# EUROPEAN PATENT SPECIFICATION

(11) **EP 2 379 249 B1**
(45) Date of publication and mention of the grant of the patent: **17.04.2013**
(21) Application number: 10706366.1
(22) Date of filing: 18.01.2010
(51) Int. Cl.: B22D 17/20, F16J 15/56

(54) **SEALING RING FOR DIE CASTING PISTONS**
DICHTUNGSRING FÜR DRUCKGUSSKOLBEN
BAGUE D'ÉTANCHÉITÉ POUR PISTONS MOULÉS EN MATRICE

(30) Priority: 21.01.2009 IT MI20090060
(43) Date of publication of application: 26.10.2011
(73) Proprietor: Brondolin S.p.A., 21012 Cassano Magnago (Varese) (IT)
(72) Inventor: BRONDOLIN, Davide, I-21013 Gallarate (va) (IT)
(74) Representative: Ferroni, Filippo
(86) International application number: PCT/IB2010/050222
(87) International publication number: WO 2010/084453

(56) References cited:
- DE-A1- 4 230 080
- DE-A1- 19 942 242
- GB-A- 551 855
- GB-A- 849 373
- JP-A- 4 033 759
- JP-A- 53 102 222

## Description

The present invention relates to a sealing ring for die casting pistons, in particular for, without being limited to, cold-chamber die casting processes.

It is appropriate to specify beforehand that, although in the following description reference will be made for simplicity mainly to cold-chamber pressure die casting, this should not however be understood as a limiting factor, since the present invention is also applicable to, unless specifically incompatible with, other types of pressure die casting processes (e.g. hot-chamber die casting) for metallic or non-metallic materials.

The cold-chamber pressure die casting process has been known for a long time, and therefore it will not be described in detail below, with the exception of what is strictly needed in order to understand the invention. For further information, reference should be made to the numerous technical and scientific publications on this matter.

In this process, molten metal is poured into a container having a cylindrical inner cavity, in which the metal is pushed by a moving piston towards an axial outlet, thereby being injected into a die containing the mould of the part to be cast.

In order to improve the pressure exerted onto the molten metal by the piston, a known solution employs sealing rings much like those applied to pistons of internal-combustion engines, even though, of course, the different application of pressure die casting process requires specific technical measures.

Several types of sealing rings are now available for this purpose, which for simplicity may be divided into two different categories.

The first category is based on the principle of exploiting the infiltration of molten metal between the ring and the piston, thus causing the ring to expand radially and attaining the desired seal against the cylindrical inner wall of the container; one example of a ring of this kind has been described in European patent EP 1 197 279 granted in 2001.

The second category is based on creating a labyrinth seal between the ring inner surface and the piston, thanks to a conjugated configuration of both components, wherein the former has an annular groove and an annular rib matching the homologous annular groove and annular rib provided on the latter.

This labyrinth seal, along with a particular step-like shape of the cut that confers elasticity to the ring, allows the latter to expand radially without the risk that molten metal may leak between the piston and the sealing ring.

One example of this second technology has been described in European patent EP 423 413 granted in 1997.

Some special applications also exist wherein the ring is of the closed type, i.e. with no cut: this is the case when the container end has no leads to the cylindrical chamber in which the piston slides.

A closed ring, i.e. with no cut, will keep its diameter unchanged because it will not expand when it comes out of the container at the end of the stroke, unlike an open ring, to which the cut confers some elasticity.

An important aspect relating to the proper execution of the pressure die casting process is the lubrication of the sealing ring.

In fact, said lubrication must ensure that the piston slides smoothly in spite of the high temperature of the molten metal; this is not always easily accomplished, also because of the irregularities of the container's cylindrical inner chamber, where the piston slides. Such irregularities may be due to worn chamber walls, molten metal deposits, etc.

Two types of lubricants are currently in use for this purpose, i.e. dry lubricants and fluid lubricants.

The former consist of granular lubricating substances that melt under the action of heat: this solution delays the evaporation of the lubricant in the chamber, thus providing a more durable effect.

In particular, the granules are admitted into the container chamber when it is still hot, between one piston injection stroke and the next, so that the granules will evaporate on the chamber walls to lubricate them and facilitate the piston sliding action.

This solution does not appear to be very effective, in that evaporation of the granules may occur at different times, depending on the temperature in the different points of the chamber; as a consequence, the chamber walls may be lubricated unevenly.

As an alternative to the granular form, fluid lubricants are also known to be used for this purpose; a lubricating liquid is usually delivered onto the piston wall or around the piston rod, so that during the stroke in the cylindrical chamber the lubricating fluid can be distributed onto the chamber walls.

The piston wall is typically lubricated when retracted from the chamber, at the end of an injection cycle and before the beginning of the next one.

To this end, oil is sprayed onto the piston wall surface before the piston is driven into the chamber in order to inject the loaded liquid metal.

In this solution, the oil can hardly stay on the piston outer surface for the whole injection and return strokes, since a portion thereof will tend to evaporate through the effect of heat and another portion will run down from the piston during the first part of the stroke. It follows that lubrication is not quite uniform and effective in this case as well.

On the other hand, for the outer surface of the piston to be lubricated when it is inside the cylindrical chamber, suitable channels must be provided through said surface, which will inevitably get obstructed by the liquid metal leaking between the cylindrical chamber and the piston.

This situation will not occur if the lubricant is applied onto the piston rod, as known in the art, e.g. from European patent application published as EP-1 336 445, wherein the lubricating fluid is a mixture of oil and water which is also used for cooling the chamber walls.

In this case, however, the lubricant is not sprayed or distributed onto the walls of the cylindrical chamber or of the piston, but inside the latter, so that during the return stroke the lubricating mixture will fall by gravity onto the chamber bottom.

It is apparent that such a system can only lubricate the bottom or the lower part of the chamber, and therefore proves to have limited effectiveness; moreover, it must also be taken into account that, the piston being a moving element, it is not easy to arrange pipes or ducts to deliver oil onto the rod.

In general, it can be asserted that the piston lubrication systems known in the art are rather complex and cannot always ensure good results with different shapes and dimensions of the systems themselves, the container, or the die casting apparatus in which they are being used. Piston lubrication systems are known from GB849373A, JP-4033759-A and JP-53102222-A.

The technical problem at the basis of the present invention is therefore to provide a pressure die casting piston, in particular for, without being limited to, the cold-chamber pressure die casting technology, which ensures effective lubrication regardless of whether the lubricant is liquid or solid and of the application system in use.

The idea offering a solution to this problem comes from understanding that an important element for lubrication effectiveness is the sealing ring applied to the piston.

According to the invention, said technical problem is solved by a sealing ring for according to claim 1.

Thus, a portion of the lubricant lapping the cylindrical chamber wall will deposit into the groove as the piston moves down the chamber, so that it can be distributed in a more effective manner.

For this purpose, the groove provided on the ring is at a distance from both edges of the latter; furthermore, the groove extends along the whole circumference of the ring.

These and other features of the invention will be specifically set out in the appended claims.

Such features will become more apparent from the following description of a nonlimiting preferred embodiment of the invention as shown in the annexed drawings, wherein:
- Fig. 1 is a perspective view of a piston with a ring according to the present invention;
- Fig. 2 is a perspective view of the piston of Fig. 1 with a portion thereof removed;
- Figs. 3 to 5 and 7 to 10 show respective alternative embodiments of the sealing ring according to the invention, whereas Fig. 6 is not part of the invention.

Referring now to the drawings, in particular to the first two of them, reference numeral 1 designates as a whole a cold-chamber pressure die casting piston according to the invention.

The piston comprises a cylindrical outer wall 2 which is mounted on a support 3 in a per se known manner, e.g. by means of a threaded coupling (not shown in drawings), which will not be described any further.

It is just worth mentioning that, in this example, at the base of the support 3 there are flat regions 4 to be engaged with tools, such as spanners or the like, for mounting it onto the die casting machine.

In the front portion of the cylindrical wall 2 (with reference to the direction of forward motion of the piston), a sealing ring 5 according to the invention has been applied.

In this case, ring 5 is open, i.e. it has a cut 7 with juxtaposed ends, but it may as well be a closed ring, as explained above with reference to the state of the art.

For mounting ring 5 onto the cylindrical wall 2 of the piston, the former is internally fitted with a series of teeth 8 which engage into matching seats provided in the latter (not shown in the drawings); of course, other ring-to-piston engagement systems may be conceived as well, e.g. annular cavities and ribs, as already known in the art.

Such engagement systems will preferably also prevent the ring from turning relative to the piston.

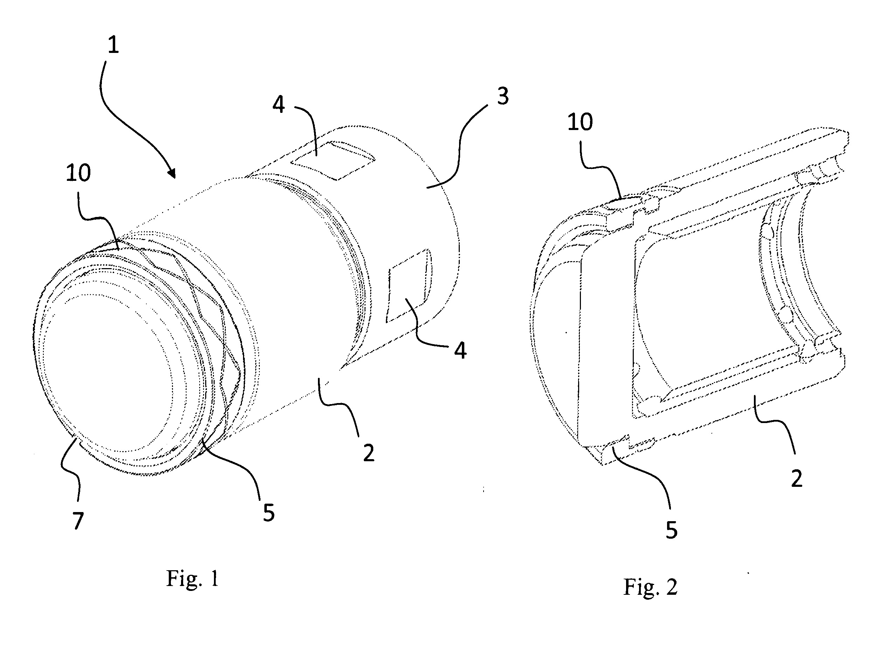

In accordance with the invention, on the outer surface of ring 5 there is a groove 10, which in Figs. 1 and 2 looks like as a succession of rhombi; the depth of this groove 10 is approx. 0.5-1.2 mm, and according to the invention it has no points of contact with the edges of the ring, i.e. the front and rear sides thereof.

When the piston is sliding in the container's cylindrical chamber (not shown in the drawings for simplicity), the lubricant between said chamber and the surface of the ring 5 fills groove 10, which is thus used as an accumulation volume.

In the course of the pressure die casting process, the lubricant will tend to evaporate through the effect of the heat of the molten metal, thus creating a film promoting the sliding action of ring 5 along the walls of the cylindrical chamber.

In this frame, the absence of common points between groove 10 and the edges of ring 5 will prevent the molten metal from infiltrating from the front side, i.e. the side of forward motion of the piston, and clogging groove 10; on the other hand, the absence of common points between the groove and the rear side of the ring will prevent the lubricant from flowing out of the groove and losing its positive effect on the sliding action of piston 1.

It should be pointed out that the above-described effects are enhanced by the fact that, according to a preferred embodiment, groove 10 is closer to the rear edge of the ring 5, with reference to the direction of forward motion of the piston, than to the front edge. Of course, the above also applies to the piston return stroke, wherein the front and rear sides, as well as the correlated effects thereof, will be reversed.

As can be easily understood, several variations of the invention may be easily conceived in the light of the present teaching.

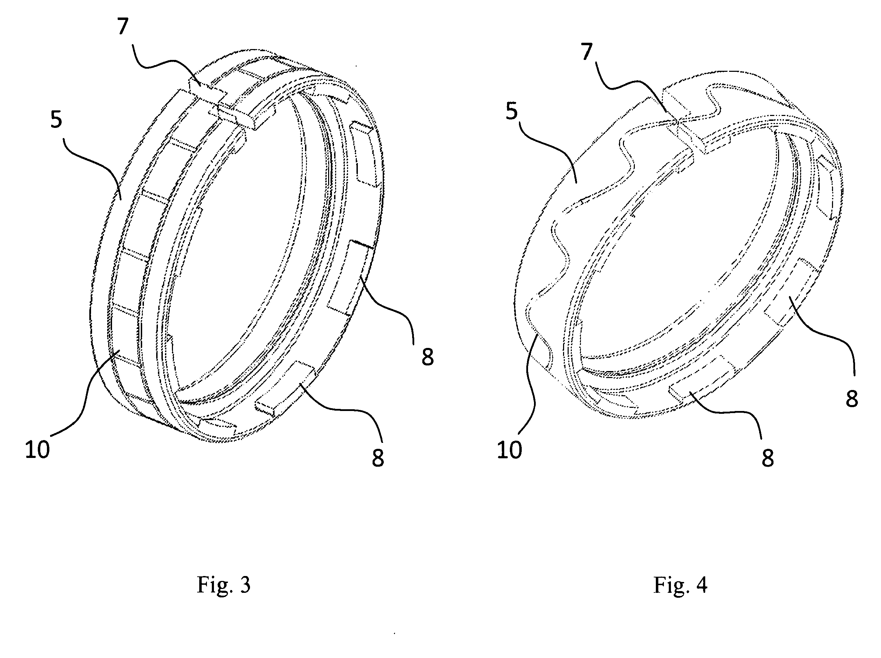

Figs. 3 to 10 show some possible embodiments of a ring 5 featuring a groove 10; as can be seen, the groove shape may differ considerably from case to case, also depending on the lubricant to be used, ring dimensions, ring material and other parameters.

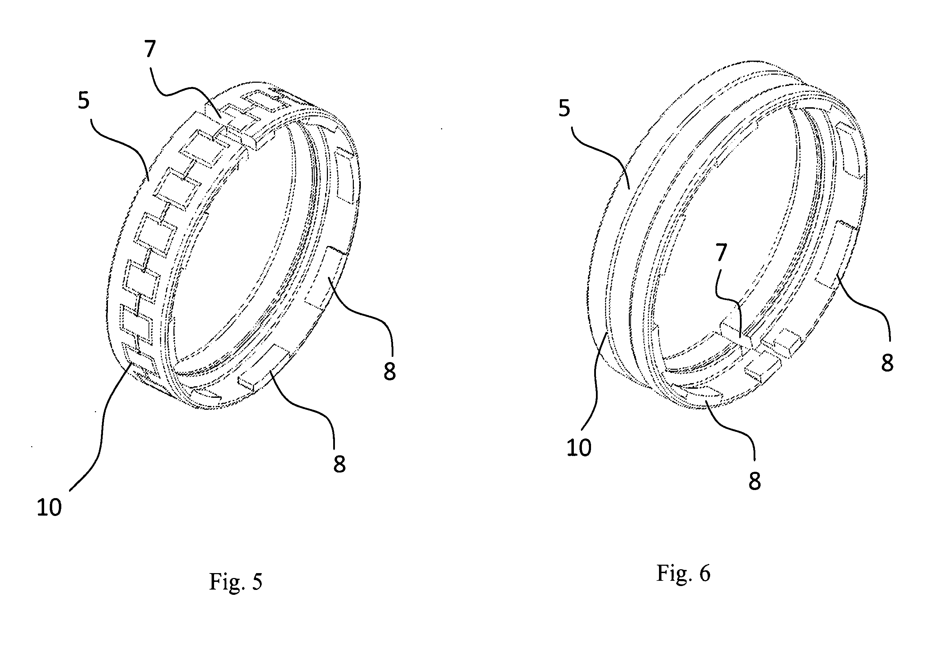

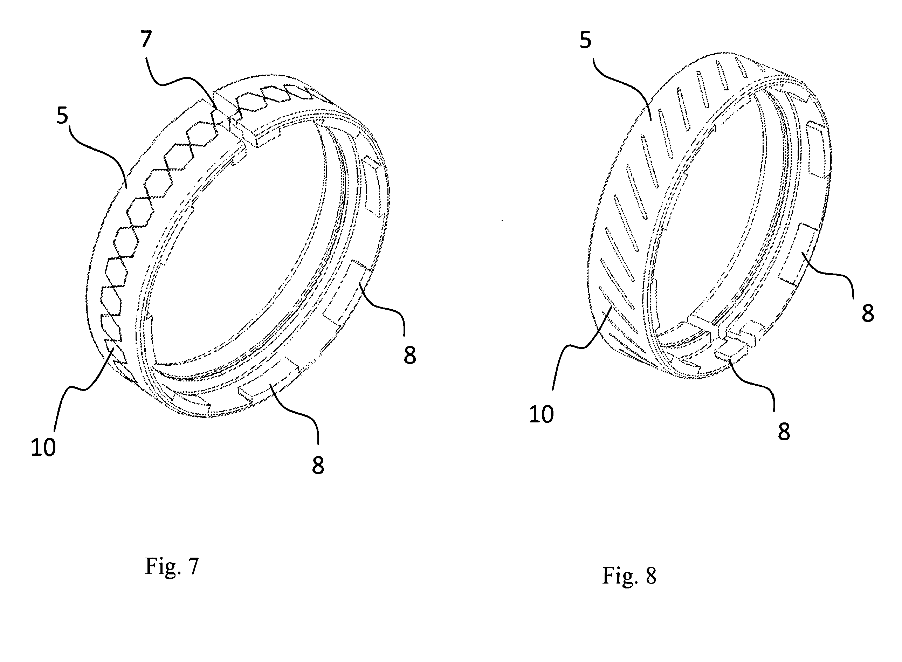

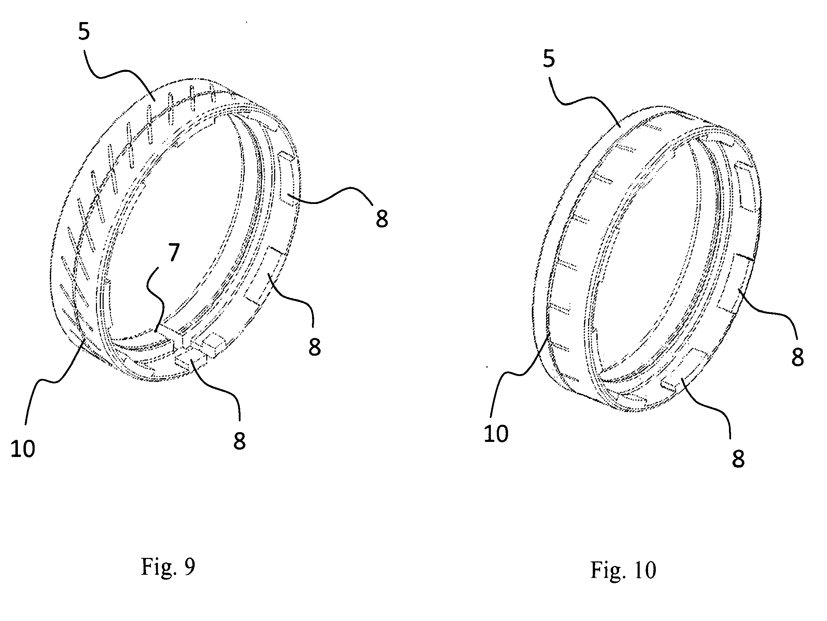

The groove consists of a series of geometrical figures joined together (rhombi in Fig. 1, rectangles in Figs. 3 and 5, hexagons in Fig. 7, and so on), a series of notches 10 separated from one another as in Fig. 8, or combinations thereof as in Fig. 9.

Furthermore, as aforementioned, the invention is also applicable to closed rings 5 like the one shown in Fig. 10, i.e. with no cut 7; such a ring, in fact, may also have a groove 10 on its outer surface.

It is finally worth mentioning that multiple rings having grooves 10 according to the above teaching may be fitted to one piston; also, such grooves may differ among the various rings.

The scope of the invention being defined by the following claims.

## Claims

1. Sealing ring (5) for die casting pistons, having a front edge and a rear edge and comprising a groove (10) on its outer cylindrical surface, wherein the groove consists of a series of geomatrical figures joined together (10) or of notches (10) **characterized in that** the notches (10) are inclined with respect to the rear and front edge of the sealing rings (5) and wherein the groove (10) has no points of contact with the front and the rear edge, of the sealing ring (5).

2. Ring according to claim 1, wherein the groove (1) substantially extends around the whole circumference of the ring.

3. Ring according to any of the preceding claims, wherein the groove (10) is substantially closer to the rear edge of the ring, with reference to the direction of forward motion of the piston during the pressure die casting process.

4. Ring according to any of the preceding claims, **characterized by** comprising a plurality of inward projecting teeth (8) adapted to engage with seats provided in the associated pressure die casting piston (1).

5. Ring according to any of the preceding claims, wherein the groove depth is between 0.5 and 1.2 mm.

6. Ring according to any of the preceding claims, comprising a cut (7) which makes it an open ring.

7. Ring according to any of the preceding claims, wherein the groove comprises an annular groove in combination with a series of notches (10).

8. Die casting piston **characterized by** comprising a sealing ring (5) according to any of the preceding claims.

## Patentansprüche

1. Dichtungsring (5) für Druckgusskolben, der eine vordere Kante und eine hintere Kante aufweist und eine Nut (10) auf seiner äußeren zylindrischen Oberfläche umfasst, wobei die Nut aus einer Reihe von miteinander verbundenen geometrischen Figuren (10) oder von Aussparungen (10) besteht, **dadurch gekennzeichnet, dass** die Aussparungen (10) bezüglich der hinteren und der vorderen Kante des Dichtungsrings (5) geneigt sind und wobei die Nut (10) keine Berührungspunkte mit der vorderen und der hinteren Kante des Dichtungsrings (5) aufweist.

2. Ring gemäß Anspruch 1, wobei sich die Nut (10) im Wesentlichen um den gesamten Umfang des Rings erstreckt.

3. Ring gemäß einem der vorangegangenen Ansprüche, wobei die Nut (10) im Wesentlichen näher an der hinteren Kante des Rings bezüglich der Richtung einer Vorwärtsbewegung des Kolbens während des Druckgussprozesses ist.

4. Ring gemäß einem der vorangegangenen Ansprüche, **dadurch gekennzeichnet, dass** er eine Mehrzahl von nach innen vorstehenden Zähnen (8) aufweist, die ausgebildet sind mit Sitzen in Eingriff zu treten, die in dem zugeordneten Druckgusskolben (1) vorgesehen sind.

5. Ring nach einem der vorangegangenen Ansprüche, wobei die Tiefe der Nut zwischen 0,5 und 1,2 mm ist.

6. Ring gemäß einem der vorangegangenen Ansprüche, umfassend einen Schnitt (7), der ihn zu einem offenen Ring macht.

7. Ring gemäß einem der vorangegangenen Ansprüche, wobei die Nut eine ringförmige Nut in Kombination mit einer Reihe von Aussparungen (10) umfasst.

8. Druckgusskolben, **dadurch gekennzeichnet, dass** er einen Dichtungsring (5) gemäß einem der vorangegangenen Ansprüche umfasst.

## Revendications

1. Anneau d'étanchéité (5) pour des pistons coulés sous pression, présentant un bord avant et un bord arrière et comprenant une rainure (10) sur sa surface cylindrique extérieure, dans lequel la rainure consiste en une série de figures géométriques reliées ensemble (10) ou en entailles (10), **caractérisé en ce que** les entailles (10) sont inclinées par rapport au bord arrière et avant de l'anneau d'étanchéité (5), et dans lequel la rainure (10) ne présente aucun point de contact avec le bord avant et arrière de l'anneau d'étanchéité (5).

2. Anneau selon la revendication 1, dans lequel la rainure (1) s'étend sensiblement autour de toute la circonférence de l'anneau.

3. Anneau selon l'une quelconque des revendications précédentes, dans lequel la rainure (10) est sensiblement plus près du bord arrière de l'anneau, en se référant à la direction d'un mouvement vers l'avant du piston pendant le processus de coulée sous pression.

4. Anneau selon l'une quelconque des revendications précédentes, **caractérisé par le fait qu'**il comprend une pluralité de dents faisant saillie vers l'intérieur (8) adaptées pour venir en prise avec des sièges disposés dans le piston coulé sous pression associé (1).

5. Anneau selon l'une quelconque des revendications précédentes, dans lequel la profondeur de la rainure est comprise entre 0,5 et 1,2 mm.

6. Anneau selon l'une quelconque des revendications précédentes, comprenant une découpe (7) qui en fait un anneau ouvert.

7. Anneau selon l'une quelconque des revendications précédentes, dans lequel la rainure comprend une rainure annulaire combinée à une série d'entailles (10).

8. Piston coulé sous pression, **caractérisé par le fait qu'**il comprend un anneau d'étanchéité (5) selon l'une quelconque des revendications précédentes.
